## Europäisches Patentamt

## European Patent Office

## Office européen des brevets

(19)

(11) Numéro de publication: **0 174 421**
**B1**

# FASCICULE DE BREVET EUROPEEN

(12)

(45) Date de publication du fascicule du brevet:
24.05.89

(21) Numéro de dépôt: **85101673.3**

(22) Date de dépôt: **15.02.85**

(51) Int. Cl.⁴. **B 60 C 25/00,** B 60 B 21/10.
B 60 C 17/04

(54) Procédé de montage d'une enveloppe de pneumatique sur une jante.

(30) Priorité: 23.02.84 FR 8403185

(43) Date de publication de la demande:
19.03.86 Bulletin 86/12

(45) Mention de la délivrance du brevet:
24.05.89 Bulletin 89/21

(84) Etats contractants désignés:
AT BE CH DE GB IT LI LU NL SE

(56) Documents cités:
EP-A- 0 105 204
DE-A- 2 437 773
FR-A- 2 509 231
US-A- 3 981 341

(73) Titulaire: **MICHELIN & CIE (Compagnie Générale des Etablissements Michelin) Société dite:, 4 rue du Terrail, F-63000 Clermont-Ferrand (FR)**

(72) Inventeur: **Pompier, Jean-Pierre, Enval, F-63530 Volvic (FR)**

(74) Mandataire: **Renaudie, Jacques et al, Michelin & Cie Service K. Brevets, F-63040 Clermont-Ferrand Cédex (FR)**

## Description

La présente invention a pour objet un procédé de montage d'une enveloppe de pneumatique sur une jante. Elle concerne plus particulièrement le montage d'une enveloppe de pneumatique usuelle sur une jante dont les sièges pour les bourrelets de l'enveloppe de pneumatique sont orientés radialement vers l'extérieur et pourvue d'un anneau de soutien de la bande de roulement destiné à permettre un roulage à plat dans des conditions satisfaisantes.

Des jantes comportant un anneau de soutien, intégré ou rapporté par soudure ou tout autre moyen de fixation, sont bien connues. Leur emploi ne s'est pas généralisé car elles posent entre autres des problèmes de montage qui n'ont pas été résolus de manière satisfaisante dans l'état actuel de la technique. Le brevet US 2 844 180 propose d'utiliser une gorge de montage approfondie suffisamment pour que, en y introduisant un talon, la partie diamétralement opposée du même talon puisse passer par-dessus l'appui central. La demande de brevet DE 2 437 773 indique que le montage ne nécessite qu'une seule gorge approfondie, l'autre pouvant être de profondeur usuelle et qu'il est même possible de ne pas utiliser de gorge approfondie en engageant un talon à côté et au-delà de la jante en un endroit, et en passant par-dessus l'anneau de soutien au point diamétralement opposé. Cette demande propose donc de se servir, comme creux de montage, de l'espace libre au-delà et à l'extérieur du rebord de jante.

Le montage suivant cette technique connue, que ce soit avec ou sans creux de montage approfondi, nécessite une ovalisation importante de la zone basse de l'enveloppe qui doit, en deux points diamétralement opposés, passer par-dessus l'anneau de soutien dont le diamètre est plus grand que le diamètre de talon. L'expérience montre que cette ovalisation est impossible sans artifice supplémentaire parce que le moment d'inertie de flexion dans un plan approximativement parallèle au plan médian de la zone basse de l'enveloppe est très élevé. En effet, le bourrelet de l'enveloppe comporte une zone en caoutchouc de module élevé, entre la ou les nappe(s) de carcasse et, le cas échéant, son (leurs) retournement(s), plus éventuellement des renforts, en tissus ou câblés. Tous ces éléments développent leur dimension principale dans une surface approximativement parallèle au plan médian du pneu. En outre, lorsque les flancs sont fortement tendus, c'est-à-dire lorsque leur longueur radiale est faiblement surabondante par rapport à la différence entre le diamètre de la bande de roulement et le diamètre de la tringle, la difficulté d'ovaliser la zone basse est aggravée par la rigidité de la bande de roulement qui, étant incompressible circonférentiellement, retient le bourrelet.

L'objet de la présente invention est un procédé qui permet de monter une enveloppe de pneumatique usuelle sur une jante équipée d'un anneau de soutien pour roulage à plat en assurant une ovalisation facile de la zone basse.

Le procédé de montage d'une enveloppe de pneumatique selon l'invention comporte les étapes successives suivantes:

a) on fait basculer au moins un des bourrelets autour de la tringle, de manière à éloigner axialement la tringle, par rapport au plan médian de ladite enveloppe;

b) on ovalise le (les) dit(s) bourrelet(s) dans le plan de la tringle;

c) on présente ladite jante du côté de ladite enveloppe qui présente un bourrelet basculé vers le plan médian de l'enveloppe, l'axe de rotation de ladite jante perpendiculaire à l'axe de rotation de ladite enveloppe, de manière correspondante à l'ovalisation;

d) on rapproche relativement la jante et l'enveloppe tout en maintenant leurs axes de rotation approximativement perpendiculaires, jusqu'à ce que leurs centres respectifs soient quasi confondus;

e) on fait tourner ladite jante autour de la direction perpendiculaire aux axes de rotation de ladite jante et de ladite enveloppe, jusqu'à ce que lesdits axes de rotation soient approximativement parallèles;

f) on introduit l'un des bourrelets dans le creux de montage et on fait franchir le rebord de jante au côté diamétralement opposé dudit bourrelet de manière connue en soi;

g) on reprend l'opération précédente pour l'autre bourrelet;

h) on termine le montage par gonflage, de manière connue en soi.

Dans le cas d'enveloppes à flancs très tendus, et/ou dans le cas de grandes hauteurs d'appui de l'anneau de soutien, il est préférable de déformer la bande de roulement par appui externe de l'extérieur vers l'intérieur, en deux points diamètralement opposés, pour lui faire prendre une forme s'approchant d'un chiffre «huit». Cette opération doit se faire après un basculement initial des bourrelets et avant leur ovalisation. Cela diminue de beaucoup la force à développer pour assurer un basculement complémentaire suffisant des bourrelets autour de la tringle et facilite ainsi une ovalisation importante.

L'invention sera mieux comprise en consultant les dessins qui illustrent de manière non limitative, une version préférable du procédé de montage selon l'invention.

La figure 1 montre une enveloppe de pneumatique déformée selon l'invention, prête à recevoir une jante.

La figure 2 représente une enveloppe de pneumatique et une jante en cours de montage.

La figure 3 est une coupe d'une enveloppe de pneumatique dans laquelle on a introduit une jante.

La figure 4 montre une enveloppe dont un bourrelet présente une configuration normale et dont l'autre bourrelet est basculé.

La figure 5 montre la rotation relative de l'enveloppe et de la jante.

La figure 6 montre la situation de l'enveloppe et de la jante après rotation et avant montage des bourrelets.

La figure 7 montre le montage d'un bourrelet.

La figure 8 montre un appareil servant à déformer une enveloppe de pneumatique, ainsi qu'une enveloppe déformée.

La figure 9 montre l'introduction de la jante dans l'enveloppe déformée.

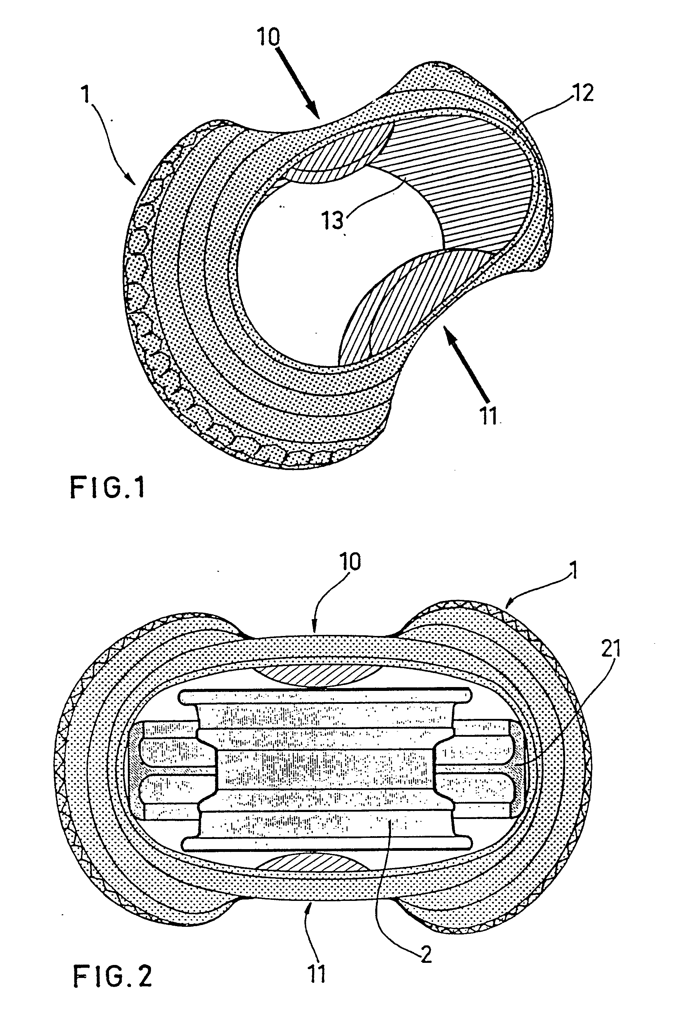

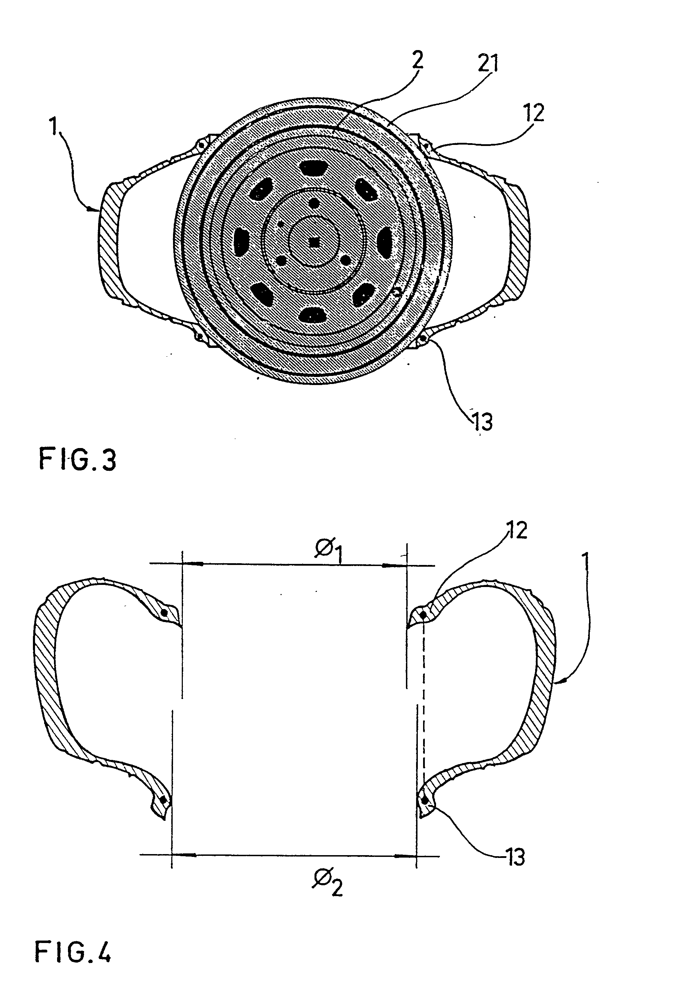

Sur la figure 1, on voit une enveloppe (1) de pneumatique que l'on a déformée de l'extérieur vers l'intérieur, par appui radial à la surface extérieure de la bande de roulement en deux endroits (10 et 11) diamétralement opposés. En réponse à cette sollicitation, la bande de roulement, inextensible radialement et circonférentiellement, se déforme de la manière figurée. Cela favorise le basculement des bourrelets (12 et 13) qui tournent autour de leur tringle et s'écartent vers l'extérieur (voir aussi fig. 3).

Ensuite, on ovalise le plus fortement possible au moins un des deux bourrelets (12 et/ou 13) et on introduit la jante (2) pourvue de son appui central (21) à l'intérieur de l'enveloppe (fig. 2 et 3). La jante est introduite dans l'enveloppe en faisant correspondre la plus grande dimension de son profil méridien avec le grand axe de l'ovale formé par au moins un bourrelet, et en maintenant perpendiculaires l'axe de rotation de la jante et celui de l'enveloppe.

La figure 4 représente une enveloppe dont un bourrelet (12) reste en position normale et un autre (13) est basculé. Cela illustre que le basculement des bourrelets facilite en soi le montage de l'enveloppe puisque, sans ovalisation, le diamètre $\varnothing_2$ mesuré à l'intérieur du bourrelet basculé est supérieur au diamètre $\varnothing_1$ mesuré au siège.

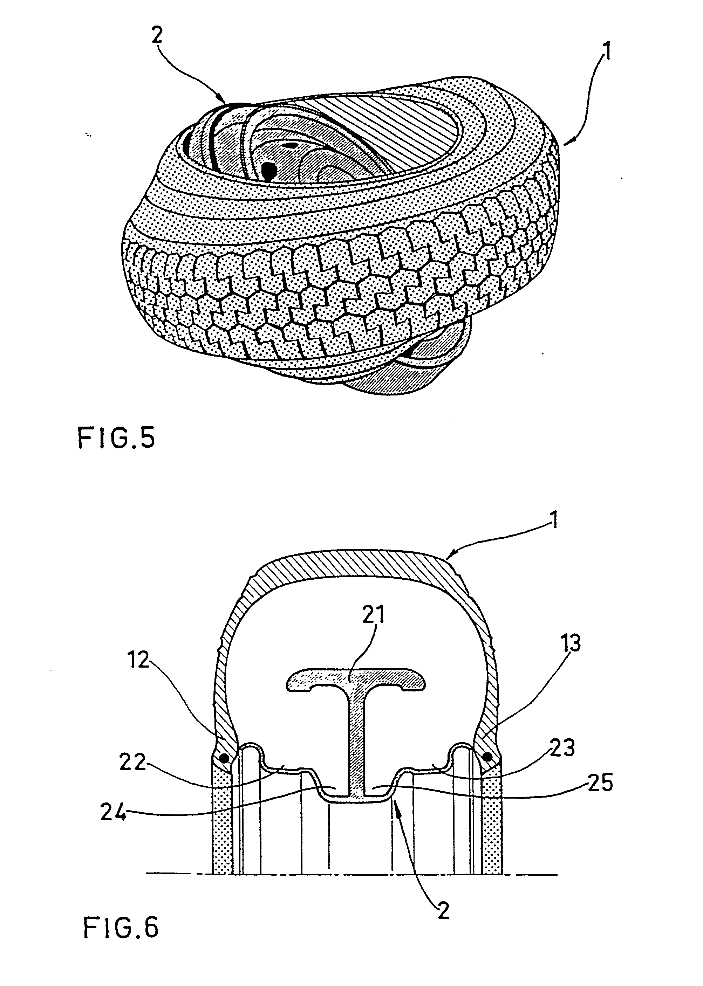

Par rotation relative (voir figure 5), on amène l'enveloppe de pneumatique (1) et la jante (2) dans le même plan, en veillant à permettre à la bande de roulement de reprendre une configuration circulaire.

A ce stade du montage, les bourrelets (12 et 13) de l'enveloppe (1) se trouvent de part et d'autre de la jante (2), au voisinage et à l'extérieur des sièges (22 et 23) sur lesquels ils doivent être montés (fig. 6).

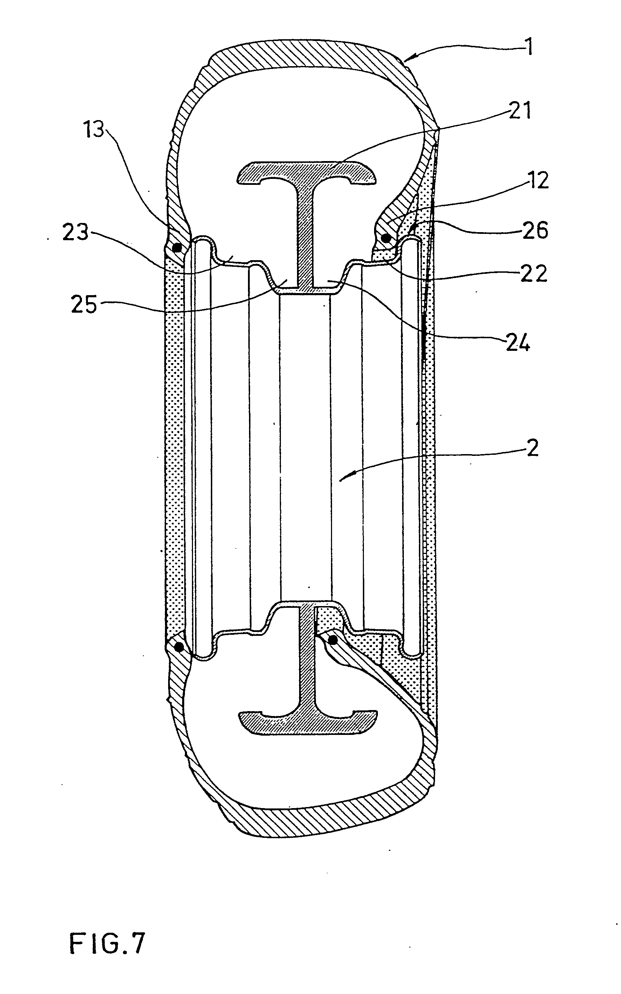

De manière connue en soi, on introduit (fig. 7) un bourrelet (12) dans le creux de montage (24) afin de franchir le rebord de jante (26) à l'endroit diamétralement opposé et on répète l'opération avec le bourrelet (13) et le creux (25).

Le montage final des bourrelets (12 et 13) sur leurs sièges respectifs (22 et 23) se termine par gonflage, de manière usuelle.

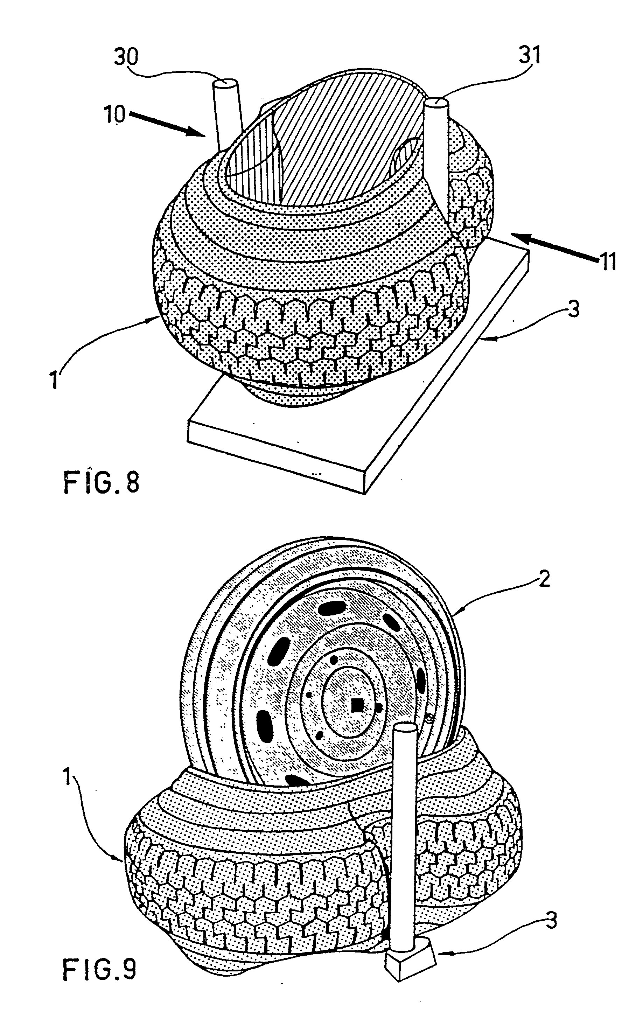

Afin de faciliter la déformation de la bande de roulement, on peut utiliser un dispositif (3) (fig. 8 et 9) constitué de deux bras (30 et 31) pouvant se rapprocher l'un de l'autre.

L'enveloppe (1) est insérée au milieu et entre les deux bras (30 et 31). On initie le basculement des bourrelets puis, par rapprochement relatif, les deux bras exercent une force sur la bande de roulement, qui se déforme et plonge vers l'intérieur de l'enveloppe. Après écartement et basculement complémentaire des bourrelets, on peut poursuivre le montage.

Les caractéristiques de jantes et des enveloppes ayant servi à la constitution d'ensembles pneumatiques par le procédé de montage selon l'invention sont indiquées dans le tableau de la page suivante.

Afin de pouvoir utiliser une hauteur d'appui suffisante pour procurer un roulage à plat dans de bonnes conditions, il est avantageux de combiner le procédé de montage selon l'invention et l'emploi de crochets peu encombrants, de jantes étroites (exemples n° 1, 2 et 3) ou d'enveloppes dont le rapport hauteur des flancs/largeur est de préférence inférieur ou égal à 0,70 (exemples 5 et 6).

L'invention s'applique au montage d'une enveloppe de pneumatique sur une jante et s'étend également aux appareils de montage utilisant le procédé de montage décrit.

| Exemple | Diamètre au siège en siège | Largeur de jante en jante | Type de crochet | Diamètre d'appui de l'anneau de soutien en mm | Dimensions et type d'enveloppe | Hauteur d'appui au-dessus du siège par rapport au diamètre au siège |
|---------|------|------|------|------|------|------|
| | selon normes E.T.R.T.O. | | | | | |
| 1 | 12 | 4 | B | 394 | 145/80 XZX | 14,6% |
| 2 | 13 | 4 | B | 427 | 145/80 XZX | 14,7% |
| 3 | 14 | 4 | B | 456 | 145/80 XZX | 14,1% |
| 4 | 15 | 4 | J | 477 | 145/80 XZX | 12,6% |
| 5 | 14 | 4,5 | B | 447 | 155/65 MXL | 12,9% |
| 6 | 14 | 5 | B | 447 | 165/65 MXL | 12,9% |

## Revendications

1. Procédé de montage d'une enveloppe de pneumatique usuelle (1) sur une jante (2) pourvue d'un appui central (21) et dont les sièges pour les bourrelets sont orientés radialement vers l'extérieur, caractérisé par les opérations successives suivantes:

a) on fait basculer au moins un des bourrelets (12 ou 13) autour de la tringle, de manière à éloigner axialement la tringle, par rapport au plan médian de ladite enveloppe;

b) on ovalise le (les) dit(s) bourrelet(s) dans le plan de la tringle;

c) on utilise ladite jante (2) du côté de ladite enveloppe (1) qui présente un bourrelet basculé (12 ou 13) vers le plan médian de l'enveloppe, l'axe de rotation de ladite jante perpendiculaire à l'axe de rotation de ladite enveloppe, de manière correspondante à l'ovalisation;

d) on rapproche relativement la jante (2) et l'enveloppe (1), tout en maintenant leurs axes de rotation approximativement perpendiculaires, jusqu'à ce que leurs centres respectifs soient quasi confondus;

e) on fait tourner ladite jante (2) autour de la direction perpendiculaire aux axes de rotation de ladite jante et de ladite enveloppe, jusqu'à ce que lesdits axes de rotation soient approximativement parallèles;

f) on introduit l'un des bourrelets (12) dans le creux de montage (24) et on fait franchir le rebord de jante (26) au côté diamétralement opposé dudit bourrelet de manière connue en soi;

g) on reprend l'opération précédente pour l'autre bourrelet (13);

h) on termine le montage par gonflage, de manière connue en soi.

2. Procédé de montage d'une enveloppe de pneumatique selon la revendication 1, caractérisé en ce que, après la première opération et avant les suivantes, on appuie radialement de l'extérieur vers l'intérieur, sur la surface extérieure de la bande de roulement en deux endroits diamétralement opposés (10 et 11), pour faire prendre à ladite bande de roulement une forme s'approchant d'un chiffre «huit», afin de faciliter l'ovalisation de la tringle par un basculement complémentaire des bourrelets.

3. Dispositif de montage caractérisé en ce qu'il comporte des moyens permettant de déformer la bande de roulement d'une enveloppe de pneumatique (1) pour la mise en œuvre du procédé selon les revendications 1 et 2.

4. Dispositifs de montage (3) selon la revendication 3, caractérisé en ce que les moyens sont constitués de deux bras (30 et 31) pouvant se rapprocher l'un de l'autre pour déformer la bande de roulement d'une enveloppe de pneumatique selon la revendication 2.

5. Ensemble pneumatique constitué par une enveloppe (1) montée sur une jante (2) pourvue d'un appui central (21), caractérisé en ce qu'il est obtenu en application du procédé selon la revendication 1 ou 2.

## Patentansprüche

1. Montageverfahren für eine übliche Luftreifenhülle (1) auf einer Felge (2), die mit einem zentralen Stützring (21) versehen ist und bei der die Sitze für die Wulste radial nach aussen gerichtet sind, gekennzeichnet durch die Aufeinanderfolge der nachstehenden Schritte:

a) Man lässt zumindest einen der Wulste (12 oder 13) um den Kern so kippen, dass der Kern bezüglich der Mittelebene der Luftreifenhülle grösseren Axialabstand aufweist;

b) man deformiert den Wulst (die Wulste) in der Ebene des Kernes oval;

c) man bringt die Felge (2) an die Seite der Luftreifenhülle (1), die einen zur Mittelebene des Luftreifens gekippten Wulst (12 oder 13) aufweist, wobei die Rotationsachse der Felge rechtwinkelig auf die Rotationsachse der Luftreifenhülle entsprechend der Ovaldeformation steht;

d) man nähert die Felge (2) der Luftreifenhülle (1), wobei man ihre Rotationsachsen annähernd rechtwinkelig zueinander hält, bis ihre Zentren übereinstimmen;

e) man dreht die Felge (2) um eine Richtung, die rechtwinkelig auf die Drehachsen der Felge und der Luftreifenhüllen steht, bis die Drehachsen annähernd parallel sind;

f) man bringt einen der Wülste (12) in die Montagerille (24) und lässt den Wulst in an sich bekannter Weise auf der diametral gegenüberliegenden Seite den Felgenrand (26) überklettern;

g) man führt das vorstehend beschriebene Verfahren für den anderen Wulst (13) aus;

h) man beendet das Montieren auf an sich bekannte Weise durch Aufblasen.

2. Montageverfahren nach Anspruch 1, dadurch gekennzeichnet, dass man nach dem ersten und vor den folgenden Schritten radial von aussen nach innen auf die äussere Oberfläche der Lauffläche einen Druck an zwei einander diametral gegenüberliegenden Punkten (10 und 11) ausübt, um der Lauffläche eine Form zu geben, die angenähert «achterförmig» ist, um die Ovalisierung des Kernes durch eine zusätzliche Kippung der Wülste zu erleichtern.

3. Montagevorrichtung, dadurch gekennzeichnet, dass sie Mittel aufweist, die es erlauben, die Lauffläche einer Luftreifenhülle zur Durchführung des Verfahrens nach Anspruch 1 und 2 zu deformieren.

4. Montagevorrichtung (3) nach Anspruch 3, dadurch gekennzeichnet, dass die Mittel aus zwei Armen (30 und 31) bestehen, die sich einander nähern können, um eine Lauffläche einer Luftreifenhülle gemäss Anspruch 2 zu deformieren.

5. Luftreifen, bestehend aus einer Luftreifenhülle (1), montiert auf einer Felge (2), die mit einer zentralen Abstützung (21) versehen ist, dadurch gekennzeichnet, dass er durch Anwendung des Verfahrens nach Anspruch 1 oder 2 erhalten worden ist.

## Claims

1. A method of mounting an usual pneumatic tyre (1) onto a wheel rim (2) having a central support ring (21) and whose seats for the tyre beads are directed radially outwardly, characterized by the following successive steps:

a) swinging at least one of the beads (12 or 13) around the bead ring so as to move the bead ring axially away from the median plane of said tyre;

b) ovalizing the bead(s) in the plane of the bead ring;

c) bringing the rim (2) to the side of the tyre (1) which has a bead (12 or 13) swung towards the median plane of the tyre, with the axis of rotation of the rim perpendicular to the axis of rotation of the tyre, in a manner corresponding to the ovalization;

d) moving the rim (2) and the tyre (1) towards each other while maintaining their axes of rotation approximately perpendicular to each other, until their respective centers are almost merged;

e) turning the rim (2) around the direction perpendicular to the axes of rotation of the rim and the tyre until the axes of rotation are approximately parallel;

f) introducing one of the beads (12) into the mounting well (24) and clearing the rim flange (26) on the diametrically opposite side of the bead in a manner known per se;

g) repeating the preceding step for the other bead (13);

h) completing the mounting by inflation of the tyre, in a manner known per se.

2. A method of mounting a tyre on a rim according to claim 1, characterized by, after the first step and before the subsequent steps, exerting a force radially from the outside towards the inside against the outer surface of the tread at two diametrically opposite places (10 and 11), so as to deform the tread into a shape approximating a "figure eight" in order to facilitate the ovalization of the bead by additional swinging of the bead around the bead ring.

3. A mounting device characterized by the fact that it comprises means for deforming the tread of the tyre (1) for the use of the method according to claims 1 and 2.

4. A mounting device (3) according to claim 3 characterized by the fact that the means consist of two arms (30 and 31) which are movable towards each other so as to deform the tread of a tyre according claim 2.

5. A combination consisting of a tyre (1) mounted or a ring (2) having a central support ring (21) characterized by the fact that it is obtained by application of the process of claim 1 or 2.

FIG.1

FIG.2

FIG.3

FIG.4

FIG.5

FIG.6

FIG.7

FIG. 8

FIG.9